# EUROPÄISCHE PATENTANMELDUNG

(11) **EP 1 614 498 A1**
(43) Veröffentlichungstag der Anmeldung: **11.01.2006**
(21) Anmeldenummer: 04016303.2
(22) Anmeldetag: 10.07.2004
(51) Int. Cl.: B23K 26/38

(54) **Verfahren zum Laserschneiden**

(71) Anmelder: TRUMPF Werkzeugmaschinen GmbH + Co. KG, 71254 Ditzingen (DE)
(72) Erfinder: Mienhardt, Uwe, 70825 Korntal-Münchingen (DE)
(74) Vertreter: Kohler Schmid Möbus

(57) **Zusammenfassung**

Bei einem Verfahren zum Laserschneiden mithilfe von Sauerstoff als Schneidgas wird die Schneidgeschwindigkeit in Abhängigkeit des Abstandes vom Schnittende reduziert. Ein Riefennachlauf beim Laserschneiden kann damit am Schnittende zuverlässig abgebaut werden.

## Beschreibung

Die Erfindung betrifft ein Verfahren zum Laserschneiden mithilfe von Sauerstoff als Schneidgas.

Beim Sauerstoffschneiden von Baustahl in Materialdicken ≥ 6 mm tritt ein ausgeprägter Riefennachlauf auf, rel. unabhängig davon, ob mit normaler oder erhöhter Schneidgeschwindigkeit geschnitten wird. Der Riefennachlauf wird am Schnittende in vielen Fällen nicht genügend abgebaut, sodass Teile nicht freigeschnitten werden.

Der Anmelder hat sich die Aufgabe gestellt, den Riefennachlauf beim Laserschneiden der eingangs genannten Art zuverlässig zu verhindern.

Diese Aufgabe wird durch ein Verfahren zum Laserschneiden mithilfe von Sauerstoff als Schneidgas, gelöst, bei dem die Schneidgeschwindigkeit in Abhängigkeit des Abstandes vom Schnittende reduziert wird. Durch die Geschwindigkeitsreduzierung kann der Bereich des programmierten Schnittendes besser bearbeitet werden.

Wenn die Schneidgeschwindigkeit ab einem bestimmten Abstand vom Schnittende linear reduziert wird, wird sicher gestellt, dass die Geschwindigkeit am Schnittende deutlich heruntergefahren wird und eine langsame Bearbeitung am Schnittende erfolgt.

In technischer Umsetzung ist es zur Vermeidung von Bearbeitungsfehlern vorteilhaft, dass die Reduzierung der Schneidgeschwindigkeit automatisch erfolgt. Es sind aber auch andere Varianten denkbar, wie eine Durchführung des Verfahrens mithilfe einer NC-Programmierung oder der Verwendung abgespeicherter Technologietabellen oder einer interaktiven Abfrage und Eingabe von Daten durch den Benutzer.

Das erfindungsgemäße Verfahren ist zum Schneiden von Baustahl geeignet und kann auch bei ähnlichen Problemstellungen eingesetzt werden.

Ein Ausführungsbeispiel der Erfindung ist in der Zeichnung schematisch dargestellt und wird nachfolgend mit Bezug zur Figur der Zeichnung näher erläutert. Es zeigt im Einzelnen:
- **Fig. 1**: eine Laserbearbeitungsanlage;
- **Fig. 2**: den Verlauf der Laserbearbeitungsgeschwindigkeit.

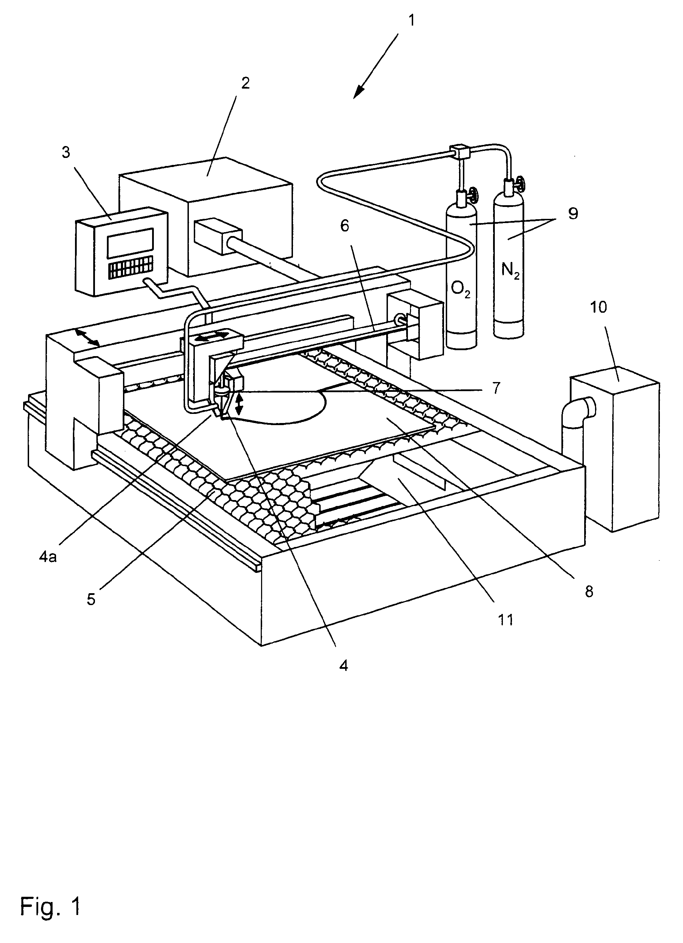

Aus der **Fig. 1** ist der Aufbau einer Laserbearbeitungsanlage **1** zum Laserschneiden mit einem CO₂-Laser **2,** einer Steuereinrichtung **3,** einem Laserbearbeitungskopf **4** (Düse **4a)** und einer Werkstückauflage **5** ersichtlich. Ein erzeugter Laserstrahl **6** wird mithilfe von Umlenkspiegeln zum Laserbearbeitungskopf 4 geführt und mithilfe einer Fokussierlinse **7** auf ein Werkstück **8** gerichtet.

Bevor eine durchgängige Schnittfuge entsteht, muss der Laserstrahl 6 das Werkstück 8 durchdringen. Das Blech 8 muss an einer Stelle punktförmig geschmolzen oder oxidiert werden und die Schmelze muss ausgeblasen werden. Der Einstechvorgang kann schnell (d.h. mit voller Laserleistung) oder langsam (über eine sog. "Rampe") erfolgen.

Beim langsamen Einstechen mit einer Rampe kann die Laserleistung allmählich erhöht, reduziert und über einen bestimmten Zeitraum konstant gehalten werden, bis das Einstechloch erzeugt ist. Sowohl das Einstechen als auch das Laserschneiden werden durch Hinzufügen eines Gases unterstützt. Als Schneidgase **9** können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden.

Beim Schneiden mit Sauerstoff wird in der Regel mit einem Gasdruck von maximal 6 bar gearbeitet. Dort, wo der Laserstrahl 6 auf das Blech 8 auftrifft, wird das Material geschmolzen und zum größten Teil oxidiert. Die entstandene Schmelze wird zusammen mit den Eisenoxiden ausgeblasen. Entstehende Partikel und Gase können mithilfe einer Absaugeinrichtung **10** aus einer Absaugkammer **11** abgesaugt werden. Beim Oxidationsvorgang (exotherme Reaktion) wird zusätzlich Energie frei, die den Schneidprozess begünstig. In den Materialdicken, bei welchen für das Sauerstoffschneiden und das Stickstoff-Hochdruckschneiden die selbe Laserleistung verwendet werden kann, ist es bei einer Verwendung von Sauerstoff als Schneidgas möglich, mit deutlich höheren Schneidgeschwindigkeiten zu arbeiten oder höhere Materialdicken zu trennen, als es beim Einsatz von Stickstoff der Fall wäre.

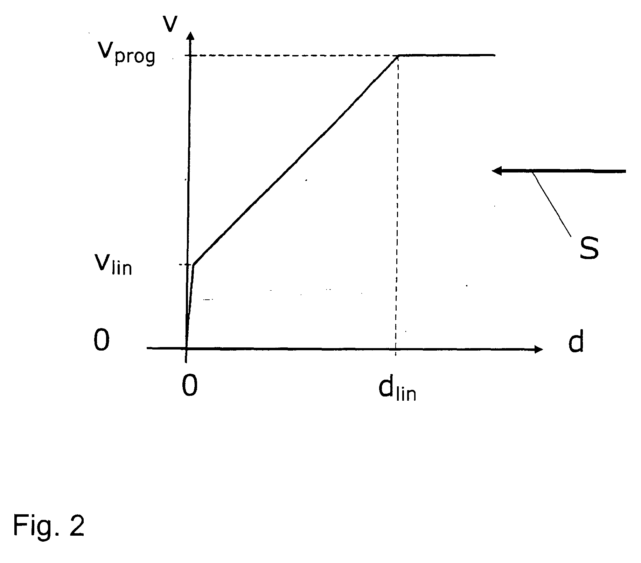

Zur Vermeidung eines Riefennachlaufs am Schnittende beim Laserschneiden von Baustahl einer Materialdicke ≥ 6mm in Schneidrichtung S bei Verwendung von Sauerstoff als Schneidgas wird eine Reduzierung der Schneidgeschwindigkeit **v** gemäß **Fig. 2** in Abhängigkeit vom Abstand **d** vom programmierten Schnittende vorgeschlagen. Die zunächst eingestellte Schneidgeschwindigkeit **v**_{**prog**} soll ab dem Abstand **d**_{**lin**} linear bis zu der reduzierten Schneidgeschwindigkeit **v**_{**lin**} reduziert werden. Anschließend wird die Schneidgeschwindigkeit v bis zum Schnittende nochmals linear bis auf Null reduziert. Beispielsweise können folgende Werte sinnvoll sein:

| | |
|---|---|
| Baustahldicke: | 15 mm |
| V_{prog}: | 1,55 m/min |
| Vₗᵢₙ: | 0,78 m/min |
| Dₗᵢₙ: | 5,1 mm. |

Zur Umsetzung der linearen Schneidgeschwindigkeitsreduzierung wird die Steuereinrichtung 3 verwendet. Die Steuereinrichtung 3 umfasst ein Display, eine CPU, einen Datenspeicher, eine Eingabeeinrichtung und eine Einrichtung zum Datenaustausch zur Laserbearbeitungsanlage 1. Die Werte der verschiedenen Parameter, die für das Laserschneiden von Bedeutung sind, können im NC-Text enthalten sein oder innerhalb des NC-Textes aufgerufen werden. Eine elegante Methode ist es, diese Daten als Technologiedaten in sog. Technologietabellen zu verwalten. Im NC-Text selbst werden dann nur diese Tabellen aufgerufen. Jede Technologietabelle ist mit einer Nummer versehen. Alle Tabellen werden zentral verwaltet und gepflegt und sind in der Steuereinrichtung 3 hinterlegt. Diese Tabellen werden für jede Materialart und -dicke angelegt. Sie enthalten optimierte Daten - abhängig vom verwendeten Laser, der Konturgröße und der Brennweite der eingesetzten Linse. In einer Technologietabelle wird unterschieden zwischen den notwendigen Einstellungen an der Maschine, den Parametern zum Einstechen in das Material und den Schneidparametern. Im NC-Programm, das den Schneidvorgang an einer Laserschneidanlage steuert, ist lediglich die Nummer der jeweils benötigten Technologietabelle abgelegt. Bei der Abarbeitung des NC-Programms werden über die Nummern die Technologietabellen aufgerufen. Die Bearbeitung wird dann mit den in der Tabelle enthaltenen Parametern durchgeführt. Alle Technologiedaten können zentral gepflegt werden. Ändern sich einzelne Parameter, sind Eingriffe in das NC-Programm nicht notwendig. Die Parameter werden in der Technologietabelle geändert und während der Abarbeitung des NC-Programms eingelesen. Ändern und Optimieren der Technologiedaten sind ohne NC-Programmierkenntnisse möglich. Gleiche Teile, die aus verschiedenen Materialien gefertigt werden sollen, müssen nur einmal programmiert werden, sofern die anderen Materialien mit den selben Bearbeitungsstrategien bzgl. z.B. Einstechen und Anfahren aus dem Einstechloch bearbeitet werden können. Bei Änderung des Materials erfolgt das Anwählen einer neuen Technologietabelle, ein möglicherweise abweichender Schnittspalt wird, sofern dies im NC-Programm aktiviert wurde, über den in der neuen Technologietabelle eingetragenen Schnittspalt berücksichtigt.

Die Reduzierung der Schneidgeschwindigkeit beim Laserschneiden von Baustahl kann mithilfe der Steuereinrichtung 3 auch vollautomatisch ohne Tabelleneinträge und ohne explizite Aktivierung der NC-Programmierung ablaufen.

Die Reduzierung der Schneidgeschwindigkeit kann in der Numerischen Steuerung (NC) über eine Software-Potifunktionalität erfolgen. Versuche ergaben, dass die Reduzierung der Schneidgeschwindigkeit unabhängig von der Materialdicke 50 % betragen kann und die Reduzierstrecke materialdickenabhängig anzupassen ist.

Ober- und Untergrenzen für Materialdicke, Schneidgeschwindigkeit und Reduzierstrecke sind in folgender Tabelle dargestellt und können in Maschinendaten umgesetzt werden:

| | |
|---|---|
| min. Materialdicke für Geschwindigkeitsreduzierung | 6 mm |
| max. Materialdicke für Geschwindigkeitsreduzierung | 36 mm |
| Potiwert der Schneidgeschwindigkeit für min. Materialdicke | 50 % |
| Potiwert der Schneidgeschwindigkeit für max. Materialdicke | 50 % |
| Reduzierstrecke für min. Materialdicke | 3 mm |
| Reduzierstrecke für max. Materialdicke | 10 mm. |

Zwischen den Minimal- und Maximalwerten soll linear interpoliert werden.

Als Erkennung, dass ein relevantes Sauerstoffschneiden von Baustahl einer Materialdicke ≥ 6 mm vorliegt, können von der NC folgende Kriterien abgefragt werden:

| | |
|---|---|
| Materialdicke: | ≥ 6 mm |
| Gasart: | 0₂ |
| Schneidgasdruck: | < 2bar |
| Tastfrequenz: | > 1 kHz. |

Zusammenfassend kann festgestellt werden, dass für die Schneidgeschwindigkeitsreduzierung folgende Möglichkeiten zur Umsetzung bestehen:
1. vollautomatisch über die NC;
2. individuell direkt mithilfe der NC-Programmierung;
3. interaktiv durch Abfrage und Eingabe von Parametern durch den Benutzer;
4. mithilfe von Technologietabellen.

### BEZUGSZEICHENLISTE

- 1: Laserbearbeitungsanlage
- 2: Laser
- 3: Steuereinrichtung
- 4: Laserbearbeitungskopf
- 5: Werkstückauflage
- 6: Laserstrahl
- 7: Fokussierspiegel
- 8: Werkstück
- 9: Schneidgas
- 10: Absaugkammer
- 11: Absaugeinrichtung

- d: Abstand
- V: Schneidgeschwindigkeit
- S: Schneidrichtung

## Patentansprüche

1. Verfahren zum Laserschneiden mithilfe von Sauerstoff als Schneidgas, **dadurch gekennzeichnet, dass** die Schneidgeschwindigkeit in Abhängigkeit des Abstandes vom Schnittende reduziert wird.

2. Verfahren nach Anspruch 1, **dadurch gekennzeichnet, dass** die Schneidgeschwindigkeit ab einem bestimmten Abstand linear reduziert wird.

3. Verfahren nach Anspruch 1 oder 2 **dadurch gekennzeichnet, dass** die Reduzierung der Schneidgeschwindigkeit automatisch erfolgt.

4. Verfahren nach Anspruch 1 oder 2 **dadurch gekennzeichnet, dass** die Reduzierung der Schneidgeschwindigkeit mithilfe einer NC-Programmierung durchführbar ist.

5. Verfahren nach Anspruch 1 oder 2 **dadurch gekennzeichnet, dass** eine Steuereinrichtung mit einem Datenspeicher für Technologietabellen vorgesehen ist, mit deren Hilfe die Reduzierung der Schneidgeschwindigkeit erfolgt.

6. Verfahren nach Anspruch 1 oder 2 **dadurch gekennzeichnet, dass** eine Steuereinrichtung mit einer interaktiven Kommunikationseinrichtung zur Abfrage und Eingabe von Daten durch den Benutzer vorgesehen ist.

7. Verfahren nach einem der vorhergehenden Ansprüche, **dadurch gekennzeichnet, dass** das Verfahren zum Schneiden von Baustahl eingesetzt wird.
